# EUROPEAN PATENT SPECIFICATION

(11) **EP 0 461 822 B1**
(45) Date of publication and mention of the grant of the patent: **08.05.1996**
(21) Application number: 91305163.7
(22) Date of filing: 07.06.1991
(51) Int. Cl.: C08F 8/12, C08F 8/06, C08F 8/24, C08F 8/40, B01J 20/00

(54) **Phosphoric acid-type chelate resin as uranyl ion adsorbent**
Phosphorsäureartiges Chelatharz als Uranylion-Adsorptionsmittel
Résine chélatante du type acide phosphorique comme adsorbant d'ions uranyles

(30) Priority: 07.06.1990 KR 834290
(43) Date of publication of application: 18.12.1991
(73) Proprietor: KOREA RESEARCH INSTITUTE OF CHEMICAL TECHNOLOGY, Daejeon-Jikhalshi (KR)
(72) Inventor: Park, In Hwan, Hyundai APT. 101-102, Daejeon-Jikhalshi (KR); Joo, Jae-Oh, Hyundai APT. 103-504, Daejeon-Jikhalshi (KR); Jung, Jin-Chul, 166-14 Jigok-Dong, Pook-Do (KR); Choi, Kil-Yeong, Hyundai APT. 101-904, Daejeon-Jikhalshi (KR)
(74) Representative: Perry, Robert Edward

(56) References cited:
- SU-A- 184 408
- JOURNAL OF APPLIED POLYMER SCIENCE vol. 29, no. 6, June 1984, NEW YORK pages 2045 - 2055; H. EGAWA, T. NONAKA, M. IKARI: 'PREPARATION OF MACRORETICULAR CHELATING RESINS CONTAINING DIHYDROXYPHOSPHINO AND/OR PHOSPHONO GROUPS AND THEIR ADSORPTION ABILITY FOR URANIUM'
- WORLD PATENTS INDEX Section Ch, Week 7514, 2 August 1974 Derwent Publications Ltd., London, GB; Class A, AN 75-23647W
- WORLD PATENTS INDEX Section Ch, Week 7235, Derwent Publications Ltd., London, GB; Class A, AN 72-55486T
- CHEMICAL ABSTRACTS, vol. 98, no. 6, 7 February 1983, Columbus, Ohio, US; abstract no. 35182M, POPESCU, F.N.; PEREC, E.S.; POINESCU, I.; PETRARIU, I.: 'CATION EXCHANGE RESIN' page 16 ;

## Description

### Field of the Invention

This invention relates to a phosphoric acid-type chelate resin useful for the adsorption of uranyl ion, and to a process for its production.

### Background of the Invention

It is known that uranyl ion (UO₂ ⁺⁺) is chelated by adsorption by two phosphono functional groups. Phosphoric acid-type chelate resin have hitherto been manufactured by the esterification of phosphoric acid with a polyol resin, or by introducing phosphono groups in the phenyl side-chains of styrene-divinylbenzene copolymers; see US-A-2980721.

The former process has the disadvantage that hydrolysis occurs in acidic or alkaline media, causing a decrease in the phosphono group content and a markedly reduced capability for repeated processes of adsorption-desorption.

The latter process gives a low capacity for chelating uranyl ion. Although the number of phosphono groups introduced might be increased, known processes introduce the phosphono groups in the pendant phenyl groups or into pendant chloroalkylphenyl groups after chloromethylation of the phenyl groups; see J. Appl. Polym. Sci. 29 (1984) 2045.

### Summary of the Invention

A chelating resin comprises a polymer having a main chain and, as pendant groups directly bonded to carbon atoms in the main chain, (i) phosphono groups and (ii) phosphono-phenyl or phosphono-alkylphenyl groups.

Such a resin is prepared by:
copolymerising styrene, divinylbenzene and an alkyl vinylphosphonate;
hydrolysing the alkyl-phosphono groups in the resultant polymer to phosphono groups;
if desired, introducing a chloroalkyl substituent on the phenyl group;
reacting the polymer with PCl₃; and
hydrolysing/oxidising the resultant PCl₂-substituted polymer side-chain to further phosphono groups.

### Description of the Invention

A resin has good chelating properties, e.g. for uranyl ion. Its structure is to be contrasted with chelating resins which contain only phosphono-phenyl or phosphono-alkylphenyl groups; owing to steric hindrance, the phosphono groups are chiefly introduced into the paraposition of the pendant phenyl groups. It appears that the phosphono groups in the prior art are thus arranged in one direction only, with respect to the basic copolymer skeleton, so that the steric dispersion effect of the phosphono groups, and the chelate-forming ability, are relatively low.

In the first step of the process of the invention, monomers such as styrene, divinylbenzene and CEVP, i.e. bis(2-chloroethyl)vinylphosphonate, are copolymerised, hydrolysed and oxidised to form chelate-forming phosphono groups within the basic skeleton of the copolymer resin.

Then, phosphorus trichloride is reacted with the phenyl group, a side-chain of the basic copolymer skeleton, or with a chloroalkyl group introduced in the phenyl group. The resultant substituent is hydrolysed to phosphono groups designed for the chelating function.

The following two reaction schemes generally illustrate the novel method.

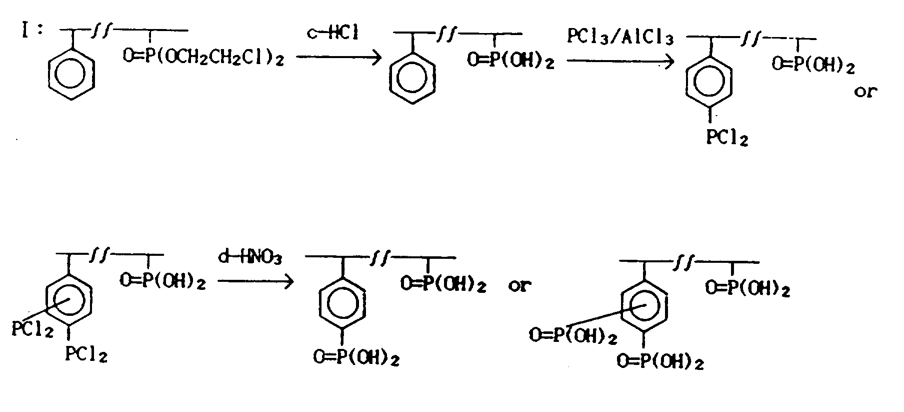

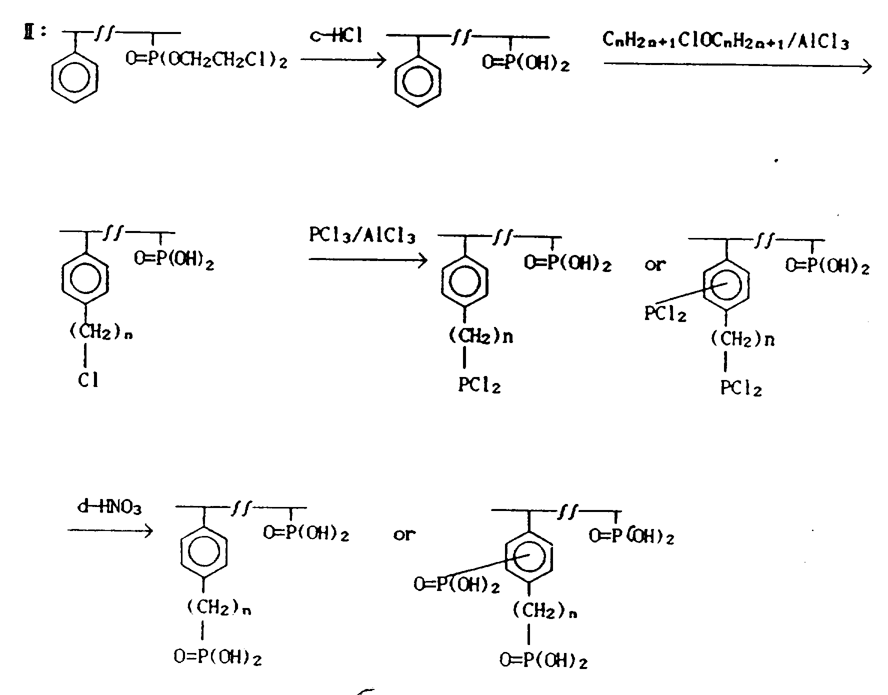

The method will now be descibed in more detail, by way of example only: first, toluene as diluent is added to monomers such as styrene, divinylbenzene, and CEVP or another alkylvinylphosphonates. These materials, plus a radical initiator, are copolymerised by suspension polymerisation at 40 to 100°C, for 2 to 50 h. With an acidic catalyst, the resultant copolymer resin is hydrolysed at 40 to 130°C for 1 to 60 h, to give a resin containing phosphono groups on its main chain.

The copolymerisation of CEVP and styrene proceeds via suspension copolymerisation to form copolymer beads: the lipophilic styrene groups are predominantly on the inner side of the spheres, while the hydrophilic CEVP groups are predominantly on the outside. This above-average surface distribution of functional groups designed for the adsorption of uranyl ion, is favourable.

Phosphorus trichloride is then reacted at 40 to 100°C for 2 to 50 h, with the phenyl groups that are side-chains of the basic copolymer skeleton, or with chloroalkyl groups introduced onto the phenyl groups, and hydrolysed and oxidised in the presence of an acid catalyst, to introduce a large number of phosphono groups into the copolymer resin.

The CEVP or other vinylphosphonate is preferably used in an amount of less than 45 mol % (max. composition in solution copolymerisation) of the total copolymer compositions. Above this limit, the copolymer yield will decrease and the reaction time becomes longer; there may then be some undesirable problems during copolymerisation, such as steric hindrance of the CEVP structure, CEVP homopolymerisation, or CEVP chain-transfer reaction.

Divinylbenzene acts as a cross-linking agent. It is preferably used in an amount of 2.0 to 30 wt % of the total amount of monomers.

The divinylbenzene provides mechanical strength to a styrene-type spherical copolymer, and acts as a ladder in the net-shaped structure, so that uranyl ion can freely enter. If the content of dinvylbenzene is below the 2.0 to 30 wt % range, it cannot so well provide the net-shaped structure; if above the increased cross-linking makes the surface area small and reduces the adsorption properties.

For the copolymerisation reaction, an organic diluent such as toluene or cyclohexane may be used, preferably in an amount of 2.0 to 20 wt % of the total amount of vinyl monomers. During copolymerisation, the diluent serves as a precipitation medium for the copolymer beads. After reaction, the diluent is physically mixed within the beads which, when dried, have increased specific surface area.

Radical polymerisation may also be used as the copolymerisation method. Radical initiators that may be used include benzoyl peroxide, p,p′-dichlorobenzoyl peroxide, methyl ethyl ketone peroxide, cumene hydroperoxide, di-t-butyl peroxide, potassium persulfate, ammonium persulfate and, as an azo-type radical initiator, disazoisobutyronitrile.

Radical suspension may also be used as the copolymerisation method. Suspension agents that may be used include methylcellulose, partially-hydrolysed polyvinyl alcohol, polyvinylpyrrolidone or their mixtures. The suspension agent is preferably used in an amount of 0.01 to 4.0 wt %, more preferably 0.1 to 2.0 wt %, of the total amount of monomers.

The suspension polymerisation can be conducted in an aqueous dispersion. The radical copolymerisation also occurs in an aqueous dispersion, e.g. at 40 to 100°C for 2 to 50 h.

The particle size of the spherical copolymer may be controlled by (a) the amount of the suspension agent and (b) the weight ratio between water and organic monomers in aqueous dispersion. The weight ratio of water to organic monomers is preferably 0.5:1 to 15:1. Below this range, it is difficult to obtain uniform aqueous dispersion owing to higher viscosity. Above this range, productivity may decrease, and energy consumption will inevitably increase due to the fact that more water should be heated.

The hydrolysis of the copolymer is conducted as follows: to one part by weight of dried copolymer resin are added 2 to 10 parts ethanol and 1 to 20 parts concentrated HCl. This mixture is maintained at 40 to 100°C for 1 to 60 h. Purification follows, by evaporating off the volatile components, washing the residue with water and methanol, and then drying.

Per part by weight of dried copolymer resin, 0.01 to 15 parts PCl₃ in solution in 2 to 20 parts cyclohexane is used for a Friedel-Crafts reaction at 40 to 100°C for 2 to 50 h, in the presence of a catalyst such as aluminium chloride in an amount of 0.01 to 10 parts by weight. The introduction of a chloroalkyl group can be conducted as follows: per part by weight of the copolymer, 0.01 to 15 parts chloroalkyl alkyl ether in solution in 1 to 30 parts cyclohexane is reacted at 40 to 100°C for 2 to 50 h, in the presence of 0.01 to 10 parts aluminium chloride catalyst. The reaction mixture is then separated by filtration and washed with distilled water and methanol.

For the conversion of phosphino groups into phosphono groups, 2 to 50 parts of 1 to 30% aqueous nitric acid is added per part by weight of the reaction mixture. Hydrolysis and oxidation are simultaneously carried out at 40 to 130°C for 1 to 60 h. The final product thus obtained is filtered, washed with water and methanol, and dried.

In the manufacture of a phosphoric acid-type chelate resin according to this invention, it may be appropriate to provide, in the coordination region around the functional part of the chelate (O=P structure), a phosphono structure essentially the same as for tributyl phosphate. This will provide for the recovery of uranyl ion. Further, it will be appropriate to consider the influences of the phosphono group content, the relative numbers of phosphono groups on the main- or side-chains of the basic chelate copolymer skeleton, the amount of cross-linking agent, and the specific surface area, and the ability to reuse the resin after adsorption-desorption.

Copolymer resins of the invention have phosphono groups both on the main chain and on the side-chains of its basic skeleton. The chelate-forming ability is markedly enhanced by this irregular structure.

In addition, since the resin has phosphono groups directly bonded to carbon atoms, the phosphono groups are not easily hydrolysed in the acid or alkali that is used during adsorption-desorption processes, for reutilisation of the resin.

The following examples illustrate the invention. Various amounts of starting materials, and properties of the products, are given in the subsequent Table.

### Examples 1 to 10

To a reactor having a stirrer were added styrene, divinylbenzene,bis(2-chloroethyl)vinylphosphonate(CEVP), toluene, and 0.2 wt % of benzoyl peroxide as an initiator. The water ratio (α value) with respect to the monomers was adjusted to 2.5, and 1% aqueous methylcellulose solution was used as a dispersion agent.

Suspension polymerisation was carried out at 70°C for 25 h, and the produced polymer was filtered, washed with water, dried in a vacuum oven at 60°C for 48 h, and passed through a sieve of 50/80 mesh.

Per part by weight of dried resin thus obtained, 4 parts methanol and 3 parts concentrated hydrochloric acid were added. This reaction mixture was refluxed and hydrolysed at 90°C for 42 h. For purification, the volatile components were evaporated, and the residue was washed with water, and dried.

Per part by weight of chelate resin having phosphono groups only in the main chain, 0.25 parts PCl₃ in 8 parts cyclohexane were added and reacted at 70°C for 30 h, in the presence of 0.25 parts aluminium chloride catalyst. The reaction mixture was separated by filtration, washed with water/methanol, and dried.

Per part by weight of dried intermediate, 10 parts of 2% nitric acid solution was reacted, for simultaneous hydrolysis and oxidation at 80°C for 20 h. After drying at 60°C for 48 h, yellow-coloured spherical chelate resin beads were obtained.

### Comparison Examples 11 to 15

The procedure of Examples 1 to 10 was repeated, but without using CEVP or the consequent hydrolysis of alkyl phosphonate groups.

### Examples 16 to 20

The procedure of Examples 1 to 10 was repeated. In an additional step, 1 part by weight of the chelate resin having phosphono groups only in the main chain was reacted with 1 part chloromethyl methyl ether in solution in 10 parts cyclohexane at 40°C for 20 h, in the presence of 0.3 parts aluminium chloride catalyst. The reaction mixture was filtered and dried under vacuum at 50°C for 48 h.

Phosphono groups were then introduced in the same way as in Examples 1 to 10, but into the chlorobenzyl groups (and the reaction and hydrolysis temperatures were 80°C and 70°C instead of 70°C and 80°C, respectively).

For the results given in the Table:

The adsorption capacity for uranyl ion was calculated from the difference of concentration after adding 0.2 g of the sample of resin to 20 ml uranyl ion solution (pH 4.27 and 20.21 ppm of uranyl ion), and stirring at room temperature for 28 h.

The concentration of divinylbenzene was calculated from the raw material feed composition (% by weight is given in brackets).

The concentration of CEVP was calculated by P analysis.

The phosphorus content was calculated from the difference in weight before and after the reaction.

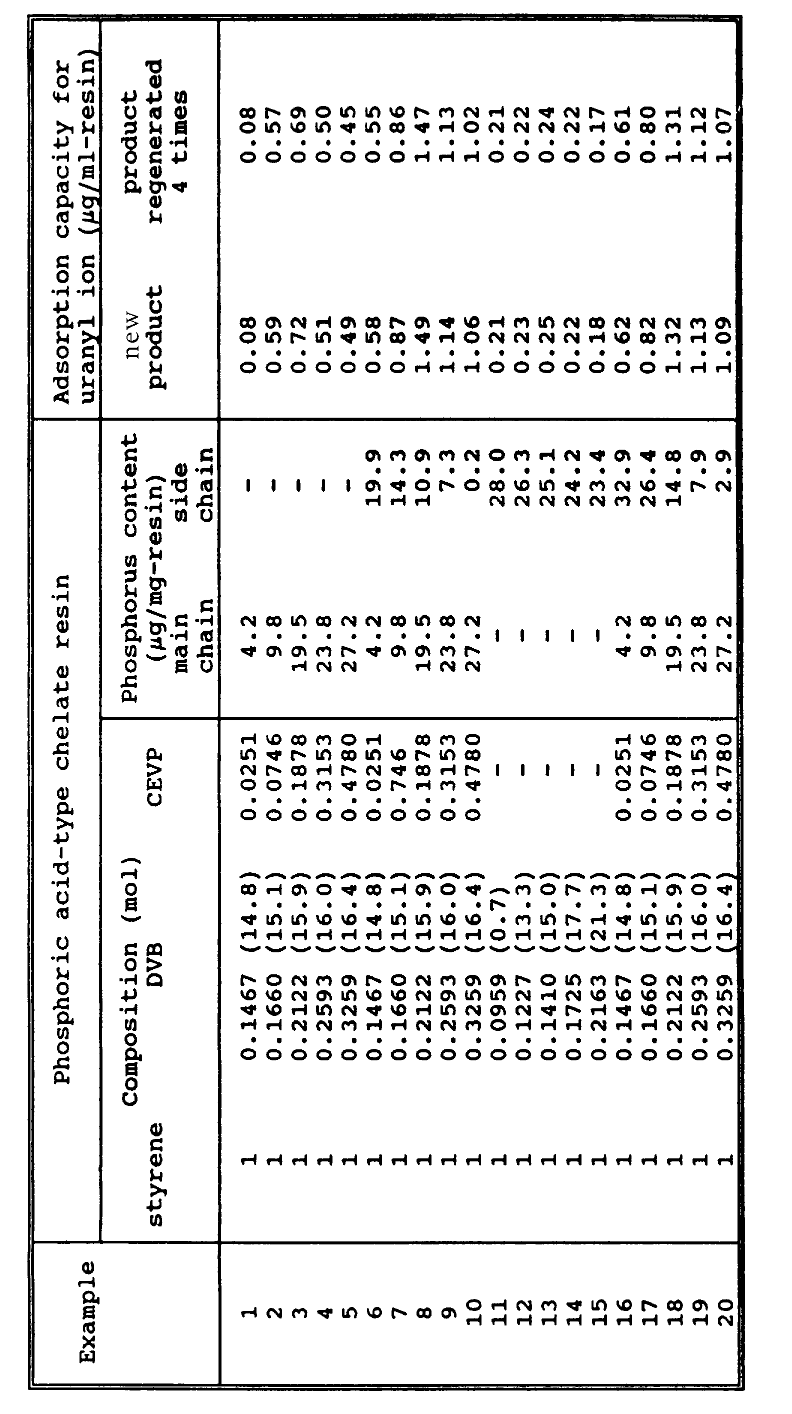

## Claims

1. A chelating resin comprising a polymer having a main chain and, as pendant groups directly bonded to carbon atoms in the main chain, (i) phosphono groups and (ii) phosphono-phenyl or phosphono-alkylphenyl groups.

2. A process for preparing a chelating resin having phosphono groups, which comprises:
copolymerising styrene, divinylbenzene and an alkyl vinylphosphonate;
hydrolysing the alkyl-phosphono groups in the resultant polymer to phosphono groups;
if desired, introducing a chloroalkyl substituent on the phenyl group;
reacting the polymer with PCl₃; and
hydrolysing/oxidising the resultant PCl₂-substituted polymer side-chain to further phosphono groups.

3. A process according to claim 2, wherein the alkyl vinylphosphonate is bis(2-chloroethyl)vinylphosphonate.

4. A process according to claim 2 or claim 3, wherein the alkyl vinylphosphonate comprises less than 45 mol % of the composition of the copolymer.

5. A process according to any of claims 2 to 4, wherein the hydrolysis/oxidation comprises reaction with nitric acid.

6. A process for adsorbing uranyl ion, which comprises contacting a sample containing uranyl ion with a chelating resin according to claim 1 or as produced by a process according to any of claims 2 to 5.

## Patentansprüche

1. Chelatbildendes Harz, das ein Polymer enthält, welches eine Hauptkette umfaßt und als in der Hauptkette enthaltene und direkt an Kohlenstoffatome gebundene Nebengruppen (i) Phosphongruppen und (ii) Phosphonphenyl- oder Phosphonalkylphenylgruppen enthält.

2. Verfahren zur Herstellung eines aus Phosphongruppen bestehenden chelatbildenden Harzes, das die folgende Schritten umfaßt:
Kopolymerisierung von Styrol, Divinylbenzol und ein Alkylvinylphosphonat;
Hydrolyse in Phosphongruppen, der Alkylphosphongruppen in dem sich ergebenden Polymer;
gegebenenfalls Einfügung eines Chloroalkylsubstituenten in die Phenylgruppe;
Reaktion des Polymers mit PCl₃ und
Hydrolyse/Oxidation in weitere Phosphongruppen, der sich ergebenden PCl₂-substituierten Polymernebenkette.

3. Verfahren nach Anspruch 2, dadurch gekennzeichnet, daß es sich bei dem Alkylvinylphosphonat um Di(2-Chloroethyl)vinylphosphonat handelt.

4. Verfahren nach Anspruch 2 oder 3, dadurch gekennzeichnet, daß das Alkylvinylphosphonat weniger als 45 Mol-Prozent der Kopolymerverbindung enthält.

5. Verfahren nach einem der Ansprüche 2 bis 4, dadurch gekennzeichnet, daß die Hydrolyse/Oxidation eine Reaktion mit Stickstoffsäure umfaßt.

6. Verfahren zur Absorption eines Uranyl-Ions mit Kontaktherstellung zwischen einem probeenthaltenden Uranyl-Ion und einem chelatbildenden Harz, das Anspruch 1 entspricht oder mit einem Verfahren nach einem der Ansprüche 2 bis 5 hergestellt wird.

## Revendications

1. Résine chélatante comprenant un polymère présentant une chaîne principale et comme groupes greffés directement liés à des atomes de carbone de la chaîne principale, (i) des groupes phosphono et (ii) des groupes phosphono-phényle ou phosphono-alkylphényle.

2. Procédé pour la préparation d'une résine chélatante présentant des groupes phosphono, comprenant les étapes consistant à:
copolymériser du styrène, du divinylbenzène et un phosphonate d'alkylvinyle;
hydrolyser en groupes phosphono, les groupes alkylphosphono du polymère résultant;
facultativement, introduire un substituant chloroalkyle sur le groupe phényle;
faire réagir le polymère avec PCl₃; et
hydrolyser/oxyder en groupes phosphono supplémentaires, la chaîne latérale du polymère substitué par PCl₂.

3. Procédé selon la revendication 2, dans lequel le phosphonate d'alkylvinyle est le phosphonate de bis(2-chroroéthyl)vinyle.

4. Procédé selon la revendication 2 ou 3, dans lequel le phosphonate d'alkylvinyle contient moins de 45 % molaires de la composition du copolymère.

5. Procédé selon l'une quelconque des revendications 2 à 4, dans lequel l'hydrolyse/oxydation comprend une réaction avec l'acide nitrique.

6. Procédé pour absorber un ion uranyle, qui comprend la mise en contact d'un échantillon contenant un ion uranyle avec une résine chélatante selon la revendication 1, ou produite par un procédé selon l'une quelconque des revendications 2 à 5.
